# EUROPÄISCHE PATENTSCHRIFT

(11) **EP 2 764 239 B1**
(45) Veröffentlichungstag und Bekanntmachung des Hinweises auf die Patenterteilung: **09.08.2017**
(21) Anmeldenummer: 12767023.0
(22) Anmeldetag: 04.10.2012
(51) Int. Cl.: F03D 7/02

(54) **VERFAHREN ZUM BETREIBEN EINER WINDENERGIEANLAGE UND ENTSPRECHENDE WINDENERGIEANLAGE**
METHOD FOR OPERATING A WIND TURBINE, AND A CORRESPONDING WIND TURBINE
PROCÉDÉ SERVANT À FAIRE FONCTIONNER UNE ÉOLIENNE ET ÉOLIENNE CORRESPONDANTE

(30) Priorität: 05.10.2011 DE 102011054211
(43) Veröffentlichungstag der Anmeldung: 13.08.2014
(73) Patentinhaber: Kenersys India Pvt. Ltd., Pune 411001 MAH (IN)
(72) Erfinder: COSACK, Nicolai, 30163 Hannover (DE); BECKMANN, Christian, 48155 Münster (DE)
(74) Vertreter: Glawe, Delfs, Moll
(86) Internationale Anmeldenummer: PCT/EP2012/069667
(87) Internationale Veröffentlichungsnummer: WO 2013/050502

(56) Entgegenhaltungen:
- EP-A2- 2 098 725
- DE-A1-102007 035 724
- US-A1- 2011 084 485

## Beschreibung

Die Erfindung betrifft ein Verfahren zum Betreiben einer Windenergieanlage mit einem Rotor und einem mit dem Rotor verbundenen Generator zur Abgabe von elektrischer Leistung an ein Stromnetz. Besagter Rotor weist Rotorblätter auf, deren Blattwinkel (Pitchwinkel) α zur Regelung der Drehzahl n des Rotors im Betrieb verfahrbar sind. Weiterhin wird der Rotor bei einer Drehzahl n oberhalb einer einen Betriebsbereich der Windenergieanlage (WEA) begrenzenden Drehzahlgrenze nₗᵢₘ durch eine Erhöhung der Blattwinkel α mit einer vorgegebenen positiven Blattwinkel-Verfahrrate ωᵣ zwangsgebremst. Die vorgegebene positive Blattwinkel-Verfahrrate ist dabei insbesondere eine betraglich maximal mögliche positive Blattwinkel-Verfahrrate ωᵣ, max.

Die Erfindung betrifft weiterhin eine entsprechende Windenergieanlage (WEA) mit einem Rotorblätter aufweisenden Rotor, einer Steuer- und/oder Regeleinrichtung, einer mit der Steuer- und/oder Regeleinrichtung signaltechnisch verbundenen Drehzahlermittlungseinrichtung zur Ermittlung der Drehzahl n des Rotors, mindestens einer mit der Steuer- und/oder Regeleinrichtung signaltechnisch verbundenen Parametereinstelleinrichtung und mit einem mit dem Rotor verbundenen Generator zur Abgabe von elektrischer Leistung an ein Stromnetz. Die Parametereinstelleinrichtung ist eine Parametereinstelleinrichtung zum Einstellen eines Blattwinkels α und einer Blattwinkel-Verfahrrate ω der Rotorblätter des Rotors.

Ein derartiges Verfahren und eine entsprechende Windenergieanlage (WEA) sind bekannt. Dabei wird der Rotor der Windenergieanlage bei Überschreiten einer von einem statischen Drehzahlgrenzwert bestimmten Drehzahlgrenze nₗᵢₘ durch eine Vergrößerung der Blattwinkel α (einem "aus dem Wind pitchen") mit betraglich hoher positiver Blattwinkel-Verfahrrate zwangsgebremst und die Anlage abgeschaltet, um große mechanische Beanspruchungen infolge hoher Drehzahl zu vermeiden. Im Zuge der Zwangsbremsung wird die Energieeinspeisung der Anlage in das Stromnetz gestoppt und die Drehzahl stark heruntergefahren. Im Allgemeinen befindet sich die Anlage nach der Bremsung in einem Trudelzustand, in dem keine Energieeinspeisung in das Netz erfolgt.

Nach einer solchen Zwangsbremsung muss der Zustand der Anlage erst einmal überprüft werden. Anschließend muss die Anlage, da sie ja abgeschaltet wurde, wieder in Betrieb genommen werden. Eine solche Wiederinbetriebnahme kann möglicherweise durch einen Bediener in einer Fernwarte erfolgen. In einigen Fällen muss dieser Bediener zum Anfahren der Anlage jedoch vor Ort sein. Dabei entstehen zusätzliche Kosten und die Wiederinbetriebnahme verzögert sich. In jedem Fall wird die Energieeinspeisung der Anlage bei einer solchen Bremsung für einen gewissen Zeitraum unterbrochen.

Die EP 2 098 725 A2 beschreibt ein Verfahren zum Betreiben einer Windenergieanlage mit einem Rotor der Rotorblätter aufweist, deren Blattwinkel α zur Regelung der Drehzahl n des Rotors im Betrieb verfahrbar sind und wobei der Rotor bei einer Drehzahl oberhalb einer einen Betriebsbereich der Windenergieanlage begrenzenden Drehzahlgrenze durch eine Vergrößerung der Blattwinkel mit einer vorgegebenen positiven Blattwinkel-Verfahrrate zwangsgebremst wird, wobei die Drehzahlgrenze in Abhängigkeit einer durch die Regelung eingestellten Blattwinkel-Verfahrrate verändert wird.

Es ist die Aufgabe der Erfindung ein Verfahren und eine Wlndenergieanlage anzugeben, bei denen die vorstehend genannten Nachteile vermieden werden oder zumindest seltener auftreten. Gleichzeitig soll die mechanische Beanspruchung in Folge hoher Drehzahl verringert werden.

Die Aufgabe wird bezüglich des Verfahrens durch die Merkmale des Anspruchs 1 und bezüglich der Windenergieanlage durch die Merkmale des Anspruchs 8 gelöst. Vorteilhafte Ausgestaltungen der Erfindung sind in den Unteransprüchen angegeben.

Bei dem erfindungsgemäßen Verfahren ist vorgesehen, dass die Drehzahlgrenze nₗᵢₘ in Abhängigkeit einer durch die Regelung eingestellten Blattwinkel-Verfahrrate ω verändert wird. Mit anderen Worten ist die Drehzahlgrenze nₗᵢₘ verfahrratenabhängig (nₗᵢₘ = f(ω)) und wird gegenüber einem statischen Drehzahlgrenzwert in Abhängigkeit der im regulären Betrieb durch die Regelung eingestellten Blattwinkel-Verfahrrate ω = dα/dt erhöht beziehungsweise erniedrigt.

Die Zwangsbremsung ist dabei nicht zwangsläufig auf ein Bremsen durch Vergrößerung des Blattwinkels beschränkt, sondern kann weiterhin auch einen zusätzlichen Bremsanteil aufweisen, der unabhängig vom Blattwinkel ist. Einen solchen Anteil erbringt beispielsweise eine mechanische Bremse.

Bei dem Verfahren ist weiterhin vorgesehen, dass die Veränderung der Drehzahlgrenze nₗᵢₘ in Abhängigkeit der durch die Regelung eingestellten Blattwinkel-Verfahrrate ω eine temporäre Veränderung innerhalb einer durch die Regelung vorgegebenen Zeitspanne Δt ist. Bevorzugt entspricht die durch die Regelung vorgegebene Zeitspanne Δt maximal dem Doppelten einer Ausregelzeit der Regelung, insbesondere maximal dieser Ausregelzeit selbst. Die Ausregelzeit ist ein feststehender Begriff aus der Regelungstechnik. Die Ausregelzeit eines Regelkreises ist die Zeitspanne, in der ein Regler (eine Regeleinrichtung) die Regelgröße in ein Toleranzband um die Führungsgröße herum eingeregelt hat. Da die Ausregelzeit von dem Gesamtsystem des Regelkreises bestimmt wird, gehen somit die Zeitkonstanten des Reglers (einer Steuer- und/oder Regeleinrichtung) wie der Regelstrecke ein. Alternativ kann auch die Anregelzeit zur Definition der durch die Regelung vorgegebenen Zeitspanne Δt genutzt werden.

Gemäß einer vorteilhaften Ausgestaltung der Erfindung ist vorgesehen, dass die Drehzahlgrenze nₗᵢₘ in Abhängigkeit einer durch die Regelung eingestellten Blattwinkel-Verfahrrate ω gegenüber einem vorgegebenen Basis-Drehzahlgrenzwert nₗᵢₘ₀ erhöht und/oder erniedrigt wird.

Insbesondere ist vorgesehen, dass die veränderbare Drehzahlgrenze nₗᵢₘ gegenüber dem Basis-Drehzahlgrenzwert nₗᵢₘ₀ auf einen davon abweichenden höheren vorgebbaren Drehzahlgrenzwert nₗᵢₘ₁ erhöht wird, wenn die durch die Regelung eingestellte Blattwinkel-Verfahrrate ω eine vorgegebene positive Blattwinkel-Verfahrrate ωᵣ, die insbesondere der sich üblicherweise bei einer Zwangsbremsung ergebenden Blattwinkel-Verfahrrate entspricht, bei Erreichen des Basis-Drehzahlgrenzwerts nₗᵢₘ₀ erreicht oder überschritten hat.

Durch Auswertung der Statistiken von Zwangsbremsungen bzw. Abschaltungen aufgrund eines Überschreitens eines festen Drehzahlgrenzwerts bei nicht-erfindungsgemäßen statischen Verfahren wurde festgestellt, dass ein Großteil dieser Zwangsbremsungen bzw. Abschaltungen unnötig waren, da die den regulären Betrieb steuernde/regelnde Steuerungs- und/oder Regelungseinrichtung der Windenergieanlage bereits derartige Betriebsmaßnahmen eingeleitet hatte, bei denen die Zwangsbremsung auch nicht zu einer schnelleren Rückkehr der Drehzahl n in den vorgegebenen Drehzahlbereich geführt hätte oder die Drehzahl n innerhalb einer kurzen Zeitspanne sowieso in diesen vorgegebenen Drehzahlbereich zurückgekehrt wäre. Insbesondere wenn im regulären Betrieb der Blattwinkel α der Rotorblätter bereits mit einer der vorgegebenen positiven Blattwinkel-Verfahrrate entsprechenden Blattwinkel-Verfahrrate verringert wurde, hat die Zwangsbremsung keinen Zeitvorteil gebracht.

Anders als bei der Zwangsbremsung, die als Sicherheitsmaßnahme unabhängig vom eigentlichen Betrieb die Drehzahl reduziert und bei den meisten Sicherheitskonzepten eine Abschaltung der Anlage zur Folge hat, läuft bei der temporären Erhöhung der Drehzahlgrenze der reguläre Betrieb nach Erreichen der regulären Drehzahlgrenze ohne zusätzliche Maßnahmen weiter. Mit anderen Worten: Wenn die Regelung der Windenergieanlage (WEA-Regelung) bereits die richtigen Maßnahmen zur Reduktion der Drehzahl n des Rotors eingeleitet hat, nämlich die Vergrößerung des Blattwinkels α der Rotorblätter, könnte eine Abschaltung unter Umständen überflüssig sein. Entsprechend ergibt sich die vorgebbare Zeitspanne Δt innerhalb der eine Rückkehr der Drehzahl in den Bereich unterhalb der regulären Drehzahlgrenze erfolgen soll in der gleichen Größenordnung wie die durch Zwangsbremsung benötigte Zeit für eine Rückkehr in den langfristigen Betriebsbereich. Diese Zeitspanne Δt liegt typischerweise im Bereich zwischen 2 s und 20 s.

Andererseits gibt es bei statischen Verfahren mit festem Drehzahlgrenzwert auch solche Situationen, bei denen bereits vor Erreichen der den langfristige Betriebsbereich begrenzenden Drehzahlgrenze absehbar ist, dass durch die Blattwinkel-Verfahrrate ω der Regelung keine wirksame Reduktion der Drehzahl n erreichbar ist und das Mittel der Zwangsbremsung zur Reduktion der Drehzahl wahrscheinlich oder mit Sicherheit eingesetzt werden muss. In solchen Fällen wird in einigen Ausführungsformen der Erfindung bevorzugt ein davon abweichender niedrigerer weiterer Drehzahlgrenzwert des Betriebsbereichs eingeführt.

Gemäß einer weiteren vorteilhaften Ausgestaltung der Erfindung ist daher vorgesehen, dass die veränderbare Drehzahlgrenze nₗᵢₘ gegenüber dem voreinstellbaren Basis-Drehzahlgrenzwert nₗᵢₘ₀ auf einen davon abweichenden niedrigeren vorgebbaren Drehzahlgrenzwert nₗᵢₘ₂ erniedrigt wird, wenn die durch die Regelung eingestellte Blattwinkel-Verfahrrate ω bei Erreichen oder Überschreiten einer vorgebbaren Drehzahlschwelle n_{trig} um einen vorgebbaren Betrag Δω unterhalb einer vorgegebenen positiven Blattwinkel-Verfahrrate ωᵣ der Zwangsbremsung bei Erreichen dieses niedrigeren weiteren Drehzahlgrenzwerts nₗᵢₘ₂ bleibt, insbesondere wenn die durch die Regelung eingestellte Blattwinkel-Verfahrrate ω negativ oder gleich Null ist. Eine Erniedrigung der Drehzahlgrenze nₗᵢₘ erfolgt also insbesondere dann, wenn die durch die Regelung eingestellte Blattwinkel-Verfahrrate ω zu einer weiteren Verringerung der Blattwinkel α führt. Die vorgebbare Drehzahlschwelle n_{trig} ist immer kleiner als der Basis-Drehzahlgrenzwert nₗᵢₘ₀. Die vorgebbare Drehzahlschwelle n_{trig} ist weiterhin kleiner als oder zumindest gleich groß wie der niedrigere vorgebbare Drehzahlgrenzwert nₗᵢₘ₂ (n_{trig} ≤ nₗᵢₘ₂).

Gemäß einer weiteren vorteilhaften Ausgestaltung der Erfindung ist vorgesehen, dass die veränderbare Drehzahlgrenze nₗᵢₘ gegenüber dem Basis-Drehzahlgrenzwert nₗᵢₘ₀ auf einen davon abweichenden höheren vorgebbaren Drehzahlgrenzwert nₗᵢₘ₁ erhöht wird, wenn die Drehzahl n gemäß einer Abschätzung mittels der durch die Regelung eingestellten Blattwinkel-Verfahrrate ω innerhalb der vorgegebenen Zeitkonstante Δt in den Drehzahlbereich unterhalb des Basis-Drehzahlgrenzwerts (nₗᵢₘ₀) zurückkehrt. Dabei erfolgt die Abschätzung mittels eines Vergleichs aktueller Betriebsdaten von Betriebsparametern der WEA mit abgespeicherten Datensätzen dieser Betriebsparameter oder mittels eines Vergleichs aktueller Betriebsdaten von Betriebsparametern mit Modelldaten eines mathematischen Modells des Regelkreises der Regelung.

Weiterhin ist mit Vorteil vorgesehen, dass die veränderbare Drehzahlgrenze nₗᵢₘ auch in Abhängigkeit der zeitlichen Ableitung der abgegebenen elektrischen Leistung dP/dt verändert wird. Die abgegebene Leistung verändert sich insbesondere bei plötzlichen Spannungseinbrüchen im Netz stark. In diesem Fall kommt es zu einem teilweisen oder vollständigem Verlust des Generatormoments das wiederum zu einem Beschleunigen des Rotors führt. Auch wenn über die Ablagensteuerung unverzüglich Maßnahmen, wie die Erhöhung der Blattwinkel, eingeleitet werden, resultiert aus einem Spannungseinbruch immer eine Drehzahlüberhöhung. Sehr starke Drehzahlüberhöhungen können auch zu einer Überschreitung des voreinstellbaren Basis-Drehzahlgrenzwerts nₗᵢₘ₀ und somit zu einer Zwangsbremsung führen. Insbesondere Energieversorger und Netzbetreiber fordern aus Gründen der Netzstabilität jedoch häufig, dass WEA bei Spannungsschwankungen im Netz betriebsbereit bleiben und nicht abschalten. Bei einer vorteilhaften Ausführungsform des erfindungsgemäßen Verfahrens ist daher vorgesehen, dass die Drehzahlgrenze nₗᵢₘ in Abhängigkeit einer gemessenen Leistungsänderung dP/dt verändert wird (nₗᵢₘ = f(dP/dt)). Sie wird gegenüber einem voreinstellbaren Basis-Drehzahlgrenzwerts nₗᵢₘ₀ in Abhängigkeit der gemessenen Leistungsänderung dP/dt erhöht beziehungsweise erniedrigt.

Insbesondere ist vorgesehen, dass der Betriebsbereich des Betriebs der WEA durch die Drehzahl n des Rotors, den Blattwinkel α der Rotorblätter, die entsprechende Blattwinkel-Verfahrrate ω und die abgegebene Leistung P des Generators und/oder deren Änderung dP/dt bestimmt wird.

Gemäß einer bevorzugten Ausgestaltung der Erfindung ist vorgesehen, dass der höhere vorgebbare Drehzahlgrenzwert nₗᵢₘ₂ maximal 5% oberhalb des voreinstellbaren Basis-Drehzahlgrenzwerts nₗᵢₘ₀ ist und/oder dass der niedrigere vorgebbare Drehzahlgrenzwert nₗᵢₘ₂ maximal 5% unterhalb des voreinstellbaren Basis-Drehzahlgrenzwerts nₗᵢₘ₀ ist.

Bei der erfindungsgemäßen Windenergieanlage ist vorgesehen, dass die Steuer- und/oder Regeleinrichtung sowohl zum Steuern und/oder Regeln der Drehzahl n des Rotors mittels der Parametereinstelleinrichtung als auch zum Zwangsbremsen des Rotors durch eine Vergrößerung der Blattwinkel α mit einer vorgegebenen positiven Blattwinkel-Verfahrrate ωᵣ gemäß des vorstehend genannten Verfahrens eingerichtet ist.

Gemäß einer vorteilhaften Ausgestaltung der Erfindung weist die Steuer- und/oder Regeleinrichtung einen Prozessor und einen Speicher zum Abschätzen der Drehzahl n des Rotors zumindest innerhalb einer durch die Regelung vorgegebenen Zeitspanne Δt auf.

Gemäß einer weiteren vorteilhaften Ausgestaltung der Erfindung weist die Steuer- und/oder Regeleinrichtung ein mathematisches Modell des Regelkreises der Regelung auf.

Weiterhin weist die Windenergieanlage auch eine Bremseinrichtung zum Bremsen des Rotors unabhängig vom Blattwinkel der Rotorblätter auf, wobei die Steuer- und/oder Regeleinrichtung diese Bremseinrichtung ansteuert.

Die Erfindung wird nachfolgend anhand der zugehörigen Zeichnungen näher erläutert. Es zeigen:
- Fig. 1: eine schematische Darstellung eines Teils einer Windenergieanlage gemäß einer bevorzugten Ausgestaltung der erfindungsgemäßen Windenergieanlage,
- Fig. 2: ein Diagramm bei dem die Abhängigkeit der Drehzahlgrenze von der BlattwinkelVerfahrrate gemäß einer bevorzugten Ausführungsform des erfindungsgemäßen Verfahrens dargestellt ist
- Fig. 3: ein Diagramm bei dem ein Drehzahlverlauf in einer Betriebssituation dargestellt ist, bei der eine höhere weitere Drehzahlgrenze des Betriebsbereichs sinnvoll eingeführt ist und
- Fig. 4: eine schematische Darstellung, die den Zusammenhang zwischen dem Blattwinkel und dem Anstellwinkel der Rotorblätter darstellt.

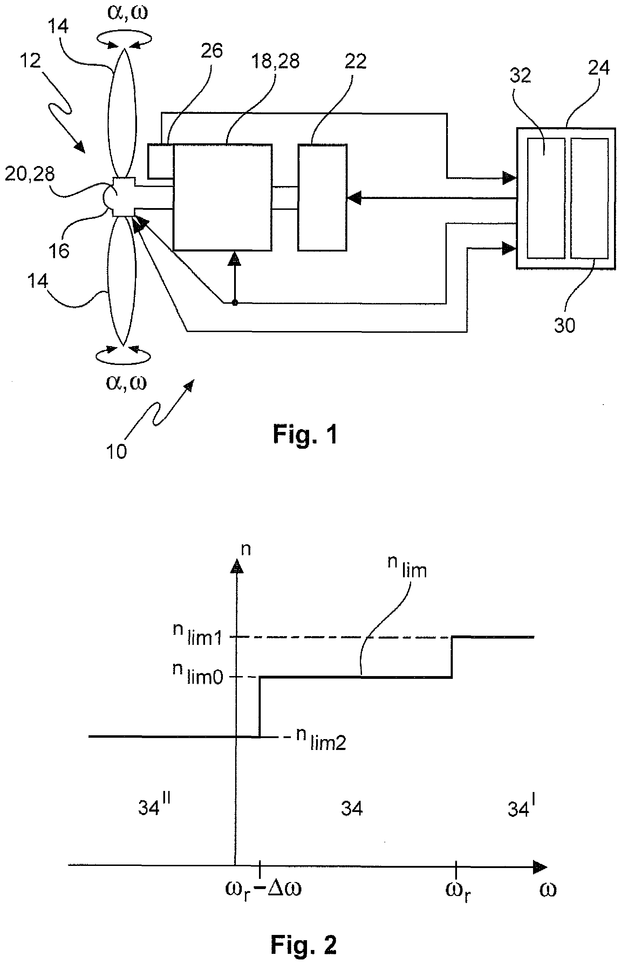

Die Figur 1 zeigt Komponenten einer Windenergieanlage (WEA) 10. Diese Windenergieanlage weist einen Rotor 12 mit Rotorblättern 14 und einen über eine Achse 16 mit dem Rotor 12 verbundenen Generator 18 auf. Ein Blattwinkel α der Rotorblätter 14 ist mittels einer Verfahreinrichtung 20 veränderbar. Anders ausgedrückt können die Rotorblätter 14 mittels dieser Verfahreinrichtung 20 in den Wind und aus dem Wind "gepitched" werden. Durch ein "pitchen aus dem Wind", also einer Vergrößerung des Blattwinkels α der Rotorblätter 14, kann die Rotationsbewegung des Rotors 12 und der Achse 16 gebremst werden. Somit stellt die Verfahreinrichtung 20 auch eine Bremseinrichtung der Windenergieanlage dar. Auf der Achse 16 ist weiterhin noch eine weitere Bremseinrichtung 22 zum Bremsen des Rotors 12 unabhängig vom Blattwinkel α der Rotorblätter 14 angeordnet.

Zum Betrieb der Windenergieanlage 10 sind mehrere Betriebsparameter einstellbar beziehungsweise veränderbar. Exemplarisch seien in dieser Darstellung des Prinzips nur eine Drehzahl n des Rotors 12, besagter Blattwinkel α der Rotorblätter, dessen zeitliche Ableitung dα/dt, also die Blattwinkel-Verfahrrate ω, und eine vom Generator 18 abgegebene Leistung P als Parameter genannt.

Die Windenergieanlage 10 weist weiterhin eine Steuer- und/oder Regeleinrichtung 24 zum Betreiben der Windenergieanlage 10 auf. Mittels dieser Steuer- und/oder Regeleinrichtung 24 werden die Betriebsparameter n, α, ω, P für den Betrieb der Anlage 10 eingestellt. Weiterhin weist die Windenergieanlage 10 eine mit der Steuer- und/oder Regeleinrichtung 24 signaltechnisch verbundenen Drehzahlermittlungseinrichtung 26 zur Ermittlung der Drehzahl n des Rotors 12 und mehrere mit der Steuer- und/oder Regeleinrichtung 24 signaltechnisch verbundene Parametereinstelleinrichtungen 28 zum Einstellen von Betriebsparametern des regulären Betriebs auf. Diese Parametereinstelleinrichtungen 28 sind hier der Generator 18 und die Verfahreinrichtung 20. Mittels dieser Verfahreinrichtung 20 kann der Blattwinkel α von der Steuer- und/oder Regeleinrichtung 24 eingestellt werden. Die Geschwindigkeit dieser Einstellung ist durch die entsprechende Blattwinkel-Verstellrate ω = dα/dt bestimmt. Diese wird ebenfalls von der Steuer- und/oder Regeleinrichtung 24 eingestellt. Die Verfahreinrichtung 20 gibt gleichzeitig ein Signal aus, aus dem die Steuer- und/oder Regeleinrichtung 24 den anliegenden Blattwinkel α sowie die Blattwinkel-Verfahrrate ω verifizieren kann beziehungsweise verifiziert. Die Einstell-Geschwindigkeit der Verfahreinrichtung 20 ist durch ihre jeweiligen maximalen Blattwinkel-Verstellraten ωₘₐₓ, ω_{max,r} begrenzt. Für ein Bremsen des Rotors 12 wird der Blattwinkel α vergrößert. Es ergibt sich beim Vergrößern des Blattwinkels mit ω = dα/dt immer eine positive Blattwinkel-Verfahrrate ω.

Während die Steuer- und/oder Regeleinrichtung 24 von der Drehzahlermittlungseinrichtung 26 und von der Verfahreinrichtung 20 Signale erhält, gibt sie Steuersignale an die Parametereinstelleinrichtungen 28 (Generator 18 und Verfahreinrichtung 20) und gegebenenfalls auch an die Bremseinrichtung 22 aus. Die Steuer- und/oder Regeleinrichtung 24 weist einen Prozessor 30 und einen Datenspeicher 32 auf Der Speicher 32 dient zum Abspeichern und Auslesen von Parameter-Sätzen, der Prozessor 30 zum Vergleich aktueller Betriebsdaten von Betriebsparametern mit abgespeicherten Datensätzen. Alternativ oder zusätzlich wird mittels Prozessor 30 und Speicher 32 ein mathematisches Modell des Regelkreises der Regelung etabliert.

Die Windenergieanlage 10 wird nun so betrieben, dass der Rotor 12 bei einer Drehzahl n oberhalb einer einen Betriebsbereich 34, 34', 34" der Windenergieanlage 10 begrenzenden Drehzahlgrenze nₗᵢₘ durch eine Vergrößerung der Blattwinkel α mit einer vorgegebenen positiven Blattwinkel-Verfahrrate ωᵣ zwangsgebremst wird, wobei diese Drehzahlgrenze nₗᵢₘ in Abhängigkeit einer durch die Regelung eingestellten Blattwinkel-Verfahrrate ω verändert wird. Dies geschieht bevorzugt stufenweise, wie Fig. 2 zeigt.

Die Fig. 2 zeigt die Abhängigkeit einer eingestellten Drehzahlgrenze nₗᵢₘ von dem durch die Regelung mittels Steuer- und/oder Regeleinrichtung eingestellten Blattwinkel-Verfahrrate ω bei einer solchen Abhängigkeit der Drehzahlgrenze nₗᵢₘ von der durch die Regelung eingestellten Blattwinkel-Verfahrrate ω in einem Diagramm. Es ergeben sich dabei drei unterschiedliche Größen des Betriebsbereichs 34, 34', 34". Bei einer positiven Blattwinkel-Verfahrrate im Bereich von ωᵣ > x > ωᵣ - Δω ergibt sich ein Basis-Drehzahlgrenzwert nₗᵢₘ₀ als Drehzahlgrenze nₗᵢₘ eines langfristigen Betriebsbereichs 34. Als obere Grenze ωᵣ der Blattwinkel-Verfahrrate ω dieses langfristigen Betriebsbereichs 34 ergibt sich die vorgegebene positive Blattwinkel-Verfahrrate ωᵣ bei der Zwangsbremsung. Als unter Grenze der Blattwinkel-Verfahrrate ω dieses langfristigen Betriebsbereichs 34 ergibt sich ein um einen vorgegebenen Betrag Δω unterhalb der vorgegebenen positiven Blattwinkel-Verfahrrate ωᵣ der Zwangsbremsung liegende Blattwinkel-Verfahrrate ωᵣ - Δω.

Die veränderbare Drehzahlgrenze nₗᵢₘ wird gegenüber dem Basis-Drehzahlgrenzwert nₗᵢₘ₀ auf einen davon abweichenden höheren vorgebbaren Drehzahlgrenzwert nₗᵢₘ₁ erhöht, wenn die durch die Regelung eingestellte Blattwinkel-Verfahrrate ω die vorgegebene positiven Blattwinkel-Verfahrrate ωᵣ der Zwangsbremsung bei Erreichen dieser höheren weitere Drehzahlgrenze nₗᵢₘ₁ erreicht oder überschritten hat. Es ergibt sich ein erweiterter Betriebsbereich 34', dessen höherer Drehzahlgrenzwert nₗᵢₘ₁ auf der linken Seite des Diagramms dargestellt ist.

Wenn die durch die Regelung eingestellte Blattwinkel-Verfahrrate co bei Erreichen oder Überschreiten einer vorgebbaren Drehzahlschwelle n_{trig} (hier nicht eingezeichnet) um einen vorgebbaren Betrag Δω unterhalb der vorgegebene positiven Blattwinkel-Verfahrrate ωᵣ der Zwangsbremsung bleibt, wird die veränderbare Drehzahlgrenze nₗᵢₘ gegenüber dem voreinstellbaren Basis-Drehzahlgrenzwert nₗᵢₘ₀ hingegen auf einen davon abweichenden niedrigeren vorgebbaren Drehzahlgrenzwert nₗᵢₘ₂ erniedrigt. Es ergibt sich ein reduzierter Betriebsbereich 34", dessen niedrigerer Drehzahlgrenzwert nₗᵢₘ₁ auf der rechten Seite des Diagramms dargestellt ist.

Zusätzlich zu der Veränderung der Drehzahlgrenze nₗᵢₘ in Abhängigkeit der durch die Regelung eingestellten Blattwinkel-Verfahrrate ω kann diese Drehzahlgrenze nₗᵢₘ auch in Abhängigkeit anderer Größen, insbesondere Betriebsgrößen, verändert werden. Die veränderbare Drehzahlgrenze nₗᵢₘ kann zum Beispiel auch in Abhängigkeit der zeitlichen Ableitung der vom Generator 18 abgegebenen elektrischen Leistung dP/dt verändert werden.

Wenn bereits eingeleitete reguläre Betriebsmaßnahmen zur Reduktion der Drehzahl n eine Rückkehr in den langfristigen Betriebsbereich 34 innerhalb einer vorgebbaren Zeitspanne Δt erkennen lassen, wird temporär der davon abweichende höhere weitere Drehzahlgrenzwert nₗᵢₘ₁ des erweiterten Betriebsbereichs 34' eingeführt. Der Rotor 12 wird nach Einführung des erweiterten Betriebsbereichs 34' temporär (für einen vorgebbaren Zeitraum) erst bei einer Drehzahl n des Rotors 12 oberhalb des den erweiterten Betriebsbereich 34' der Windenergieanlage 12 begrenzenden höheren weiteren Drehzahlgrenzwerts nₗᵢₘ₁ durch Zwangsbremsung mittels der Bremseinrichtung 20 gestoppt. Das Erkennen der Rückkehr in den langfristigen Betriebsbereich 34 erfolgt insbesondere aufgrund einer Bewertung eines Vergleichs der aktuellen Betriebsparameter n, α, ω, P oder zumindest eines Teils dieser Betriebsparameter mit gespeicherten Parametersätzen. Diesen Parametersätzen sind entsprechende Vorab-Bewertungen bezüglich einer kurzfristigen Rückkehr in den langfristigen Betriebsbereich und/oder eines längerfristigen Verlassens des langfristigen Betriebsbereichs zugeordnet und ebenfalls abgespeichert. Bei der Erweiterung des Betriebsbereichs 34 wird der höhere weitere Drehzahlgrenzwert nₗᵢₘ₁ eingeführt noch bevor die aktuelle Drehzahl n den Basis-Drehzahlgrenzwert nₗᵢₘ₀ erreicht hat.

Das Erkennen der Rückkehr in den langfristigen Betriebsbereich 34 beziehungsweise ein Erkennen eines Verlassens des langfristigen Betriebsbereichs 34 erfolgt insbesondere aufgrund einer Bewertung eines Vergleichs der aktuellen Betriebsparameter mit im Datenspeicher 32 gespeicherten Parametersätzen. Diesen Parametersätzen sind entsprechende Vorab-Bewertungen bezüglich einer kurzfristigen Rückkehr in den langfristigen Betriebsbereich 34 und/oder eines längerfristigen Verlassens des langfristigen Betriebsbereichs 34 zugeordnet und ebenfalls abgespeichert.

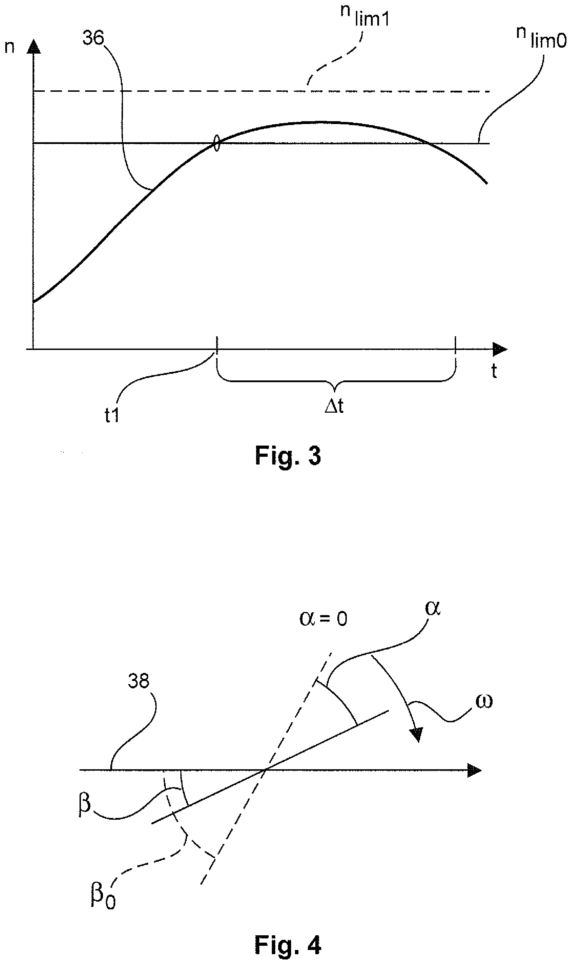

Figur 3 zeigt die Situation bei der die Erweiterung des Betriebsbereichs 34 beispielhaft in einem Diagramm bei dem ein Drehzahlverlauf 36 in einer Betriebssituation dargestellt ist, bei der ein höherer weiterer Drehzahlgrenzwert nₗᵢₘ₁ des erweiterten Betriebsbereichs 34' sinnvoll eingeführt ist. Bei der Erweiterung des Betriebsbereichs 34 zum erweiterten Betriebsbereich 34' wird der höhere weitere Drehzahlgrenzwert nₗᵢₘ₁ noch vor dem Erreichen der den langfristigen Betriebsbereich begrenzenden Basis-Drehzahlgrenzwert nₗᵢₘ₀ zum Zeitpunkt t1 eingeführt. Aufgrund der Bewertung hat die Steuer- und/oder Regeleinrichtung erkannt, dass die bereits eingeleiteten regulären Betriebsmaßnahmen zur Reduktion der Drehzahl n eine Rückkehr in den langfristigen Betriebsbereich 34 innerhalb der vorgegebenen Zeitspanne Δt erkennen lassen. Wäre in der vorgegebenen Zeitspanne Δt auch der höhere weitere Drehzahlgrenzwert nₗᵢₘ₁ überschritten, so wäre es zu einer Zwangsbremsung gekommen. Im gezeigten Fall war die Prognose des Drehzahlverlaufs richtig.

Die Fig. 4 zeigt den Zusammenhang zwischen dem Blattwinkel (Pitchwinkel) α und dem Anstellwinkel β der Rotorblätter 14 gegenüber dem Wind (Pfeil 38). Dabei ist die Nullstellung des Blattwinkels (α = 0°) im Allgemeinen bei einer optimalen Anströmstellung bei Schwachwind definiert. Diese Nullstellung des Blattwinkels α = 0° entspricht einem endlich großen Anstellwinkel β₀, der hier zu Darstellungszwecken willkürlich als 60°-Winkel gewählt ist. Ein "aus dem Wind drehen" bzw. "aus dem Wind pitchen" ausgehend von diesem Winkel β₀ entspricht einem Verringern des Anstellwinkels β beziehungsweise einem erhöhen des Blattwinkels α. Dementsprechend ist das Vorzeichen der Blattwinkel-Verfahrrate ω = dα/dt genau umgekehrt zum Vorzeichen der Anstellwinkel-Verfahrrate dβ/dt.

### Bezugszeichenliste:

- 10: Windenergieanlage
- 12: Rotor
- 14: Rotorblatt
- 16: Achse
- 18: Generator
- 20: Verfahreinrichtung
- 22: Bremseinrichtung
- 24: Steuer- und/oder Regeleinrichtung
- 26: Drehzahlermittlungseinrichtung
- 28: Parametereinstelleinrichtung
- 30: Prozessor
- 32: Datenspeicher
- 34: Betriebsbereich
- 34': erweiterter Betriebsbereich
- 34": reduzierter Betriebsbereich
- 36: Drehzahlverlauf
- 38: Pfeil
- α: Blattwinkel
- ω: Blattwinkel-Verfahrrate
- β: Anstellwinkel

## Patentansprüche

1. Verfahren zum Betreiben einer Windenergieanlage (10) mit einem Rotor (12) und einem mit dem Rotor (12) verbundenen Generator (18) zur Abgabe von elektrischer Leistung an ein Stromnetz, wobei der Rotor (12) Rotorblätter (14) aufweist, deren Blattwinkel (α) zur Regelung der Drehzahl (n) des Rotors (12) im Betrieb verfahrbar sind und wobei der Rotor (12) bei einer Drehzahl (n) oberhalb einer einen Betriebsbereich (34, 34', 34") der Windenergieanlage (10) begrenzenden Drehzahlgrenze (nₗᵢₘ) durch eine Vergrößerung der Blattwinkel (α) mit einer vorgegebenen positiven Blattwinkel-Verfahrrate (ωᵣ), insbesondere mit einer betraglich maximal möglichen positiven Blattwinkel-Verfahrrate (ω_{r, max}), zwangsgebremst wird, wobei die Drehzahlgrenze (nₗᵢₘ) in Abhängigkeit einer durch die Regelung eingestellten Blattwinkel-Verfahrrate (ω) verändert wird, **dadurch gekennzeichnet, dass** die Veränderung der Drehzahlgrenze (nₗᵢₘ) in Abhängigkeit der durch die Regelung eingestellten Blattwinkel-Verfahrrate (ω) eine temporäre Veränderung innerhalb einer durch die Regelung vorgegebenen Zeitspanne (Δt) ist.

2. Verfahren nach Anspruch 1, **dadurch gekennzeichnet, dass** die Drehzahlgrenze (nₗᵢₘ) in Abhängigkeit einer durch die Regelung eingestellten Blattwinkel-Verfahrrate (ω) gegenüber einem vorgegebenen Basis-Drehzahlgrenzwert (nₗᵢₘ₀) erhöht und/oder erniedrigt wird.

3. Verfahren nach Anspruch 2, **dadurch gekennzeichnet, dass** die veränderbare Drehzahlgrenze (nₗᵢₘ) gegenüber dem Basis-Drehzahlgrenzwert (nₗᵢₘ₀) auf einen davon abweichenden höheren vorgebbaren Drehzahlgrenzwert (nlᵢₘ₁) erhöht wird, wenn die durch die Regelung eingestellte Blattwinkel-Verfahrrate (ω) eine vorgegebene positive Blattwinkel-Verfahrrate (ωᵣ) bei Erreichen des Basis-Drehzahlgrenzwerts (nₗᵢₘ₀) erreicht oder überschritten hat.

4. Verfahren nach Anspruch 2 oder 3, **dadurch gekennzeichnet, dass** die veränderbare Drehzahlgrenze (nₗᵢₘ) gegenüber dem voreinstellbaren Basis-Drehzahlgrenzwert (nₗᵢₘ₀) auf einen davon abweichenden niedrigeren vorgebbaren Drehzahlgrenzwert (nₗᵢₘ₂) erniedrigt wird, wenn die durch die Regelung eingestellte Blattwinkel-Verfahrrate (ω) bei Erreichen oder Überschreiten einer vorgebbaren Drehzahlschwelle (n_{trig}) um einen vorgebbaren Betrag (Δω) unterhalb der vorgegebenen positiven Blattwinkel-Verfahrrate (ωᵣ) der Zwangsbremsung bleibt.

5. Verfahren nach einem der Ansprüche 2 bis 4, **dadurch gekennzeichnet, dass** die veränderbare Drehzahlgrenze (nₗᵢₘ) gegenüber dem Basis-Drehzahlgrenzwert (nₗᵢₘ₀) auf einen davon abweichenden höheren vorgebbaren Drehzahlgrenzwert (nₗᵢₘ₁) erhöht wird, wenn die Drehzahl (n) gemäß einer Abschätzung mittels der durch die Regelung eingestellten Blattwinkel-Verfahrrate (ω) innerhalb der vorgegebenen Zeitkonstante (Δt) in den Drehzahlbereich unterhalb des Basis-Drehzahlgrenzwerts (nₗᵢₘ₀) zurückkehrt, wobei die Abschätzung mittels eines Vergleichs aktueller Betriebsdaten von Betriebsparametern (n, α, ω, P) der Windenergieanlage (10) mit abgespeicherten Datensätzen dieser Betriebsparameter (n, α, ω, P) oder mittels eines Vergleichs aktueller Betriebsdaten von Betriebsparametern (n, α, ω, P) mit Modelldaten eines mathematischen Modells des Regelkreises der Regelung erfolgt.

6. Verfahren nach einem der vorhergehenden Ansprüche, **dadurch gekennzeichnet, dass** die veränderbare Drehzahlgrenze (nₗᵢₘ) auch in Abhängigkeit der zeitlichen Ableitung der abgegebenen elektrischen Leistung (dP/dt) verändert wird.

7. Verfahren nach einem der vorhergehenden Ansprüche, **dadurch gekennzeichnet, dass** der Betriebsbereich (34, 34', 34") durch die Drehzahl (n) des Rotors (12), den Blattwinkel (α) der Rotorblätter (14), die entsprechende Blattwinkel-Verfahrrate (m) und die abgegebene Leistung (P) des Generators (18) und/oder deren Änderung dP/dt bestimmt wird.

8. Windenergieanlage (10) mit
- einem Rotor (12) mit Rotorblättern (14),
- einer Steuer- und/oder Regeleinrichtung (24),
- einer mit der Steuer- und/oder Regeleinrichtung (24) signaltechnisch verbundenen Drehzahlermittlungseinrichtung (26) zur Ermittlung der Drehzahl (n) des Rotors (12),
- mindestens einer mit der Steuer- und/oder Regeleinrichtung (24) signaltechnisch verbundenen Parametereinstelleinrichtung (28) zum Einstellen eines Blattwinkels (α) und einer Blattwinkel-Verfahrrate (ω) der Rotorblätter (14) und
- einem mit dem Rotor (12) verbundenen Generator (18) zur Abgabe von elektrischer Leistung an ein Stromnetz,
**dadurch gekennzeichnet,**
**dass** die Steuer- und/oder Regeleinrichtung (24) zum Steuern und/oder Regeln der Drehzahl (n) des Rotors (12) mittels der Parametereinstelleinrichtung (28) und zum Zwangsbremsen des Rotors (12) durch eine Vergrößerung der Blattwinkel (α) mit einer vorgegebenen positiven Blattwinkel-Verfahrrate (ωᵣ) gemäß des Verfahrens nach einem der Ansprüche 1 bis 7 eingerichtet ist.

9. Windenergieanlage nach Anspruch 8, **dadurch gekennzeichnet, dass** die Steuer- und/oder Regeleinrichtung (24) einen Prozessor (30) und einen Speicher (32) zum Abschätzen der Drehzahl des Rotors (12) zumindest innerhalb einer durch die Regelung vorgegebenen Zeitspanne (Δt) aufweist.

10. Windenergieanlage nach Anspruch 9, **dadurch gekennzeichnet, dass** die Steuer- und/oder Regeleinrichtung (24) ein mathematisches Modell des Regelkreises der Regelung aufweist.

11. Windenergieanlage nach Anspruch 9 oder 10, **gekennzeichnet durch** eine Bremseinrichtung (22) zum Bremsen des Rotors (12) unabhängig vom Blattwinkel (α) der Rotorblätter (14), wobei die Steuer- und/oder Regeleinrichtung (24) auch diese Bremseinrichtung (22) ansteuert.

## Claims

1. Method for operating a wind turbine (10) having a rotor (12) and a generator (18) which is connected to the rotor (12) and has the purpose of outputting electrical power to a power grid, wherein the rotor (12) has rotor blades (14) whose blade angles (α) can be moved for the closed-loop control of the rotational speed (n) of the rotor (12) during operation, and wherein at a rotational speed (n) above a rotational speed limit (nₗᵢₘ) which bounds an operating range (34, 34', 34") of the wind turbine (10) the rotor (12) is forcibly braked by increasing the blade angles (α) with a predefined positive blade angle movement rate (ωᵣ), in particular with a positive blade angle movement rate (ω_{r, max}) which is as large as possible in absolute terms, wherein the rotational speed limit (nₗᵢₘ) is changed as a function of a blade angle movement rate (ω) which is set by the closed-loop control system, **characterized in that** the change in the rotational speed limit (nₗᵢₘ) is a temporary change within a time period (Δt) defined by the controller, depending on the blade angle movement rate (ω) set by the closed-loop control system.

2. Method according to Claim 1, **characterized in that** the rotational speed limit (nₗᵢₘ) is increased and/or decreased compared to a predefined basic rotational speed limiting value (nₗᵢₘ₀) as a function of a blade angle movement rate (ω) set by the closed-loop control system.

3. Method according to Claim 2, **characterized in that** the variable rotational speed limit (nₗᵢₘ) is increased compared to the basic rotational speed limiting value (nₗᵢₘ₀) to a relatively high predefinable rotational speed limiting value (nₗᵢₘ₁) which differs therefrom, if the blade angle movement rate (ω) which is set by the closed-loop control system has reached or exceeded a predefined positive blade angle movement rate (ωᵣ) when the basic rotational speed limiting value (nₗᵢₘ₀) is reached.

4. Method according to Claim 2 or 3, **characterized in that** the variable rotational speed limit (nₗᵢₘ) is decreased compared to the presettable basic rotational speed limiting value (nₗᵢₘ₀) to a relatively low predefinable rotational speed limiting value (nₗᵢₘ₂) which differs therefrom, if the blade angle movement rate (ω) which is set by the closed-loop control system remains below the predefined positive blade angle movement rate (ωᵣ) of the forced braking by a predefinable absolute value (Δω) when a predefinable rotational speed threshold (n_{trig}) is reached or exceeded.

5. Method according to one of Claims 2 to 4, **characterized in that** the variable rotational speed limit (nₗᵢₘ) is increased compared to the basic rotational speed limiting value (nₗᵢₘ₀) to a relatively high predefinable rotational speed limiting value (nₗᵢₘ₁) which differs therefrom, if the rotational speed (n) returns, according to an estimation by means of the blade angle movement rate (ω) set by the closed-loop control system, to the rotational speed range below the basic rotational speed limiting value (nₗᵢₘ₀) within the predefined time constant (Δt), wherein the estimation is carried out by means of a comparison of current operating data of operating parameters (n, α, ω, P) of the wind turbine (10) with stored data records of these operating parameters (n, α, ω, P) or by means of a comparison with current operating data of operating parameters (n, α, ω, P) with model data of a mathematical model of the closed-loop control circuit of the closed-loop control system.

6. Method according to one of the preceding claims, **characterized in that** the variable rotational speed limit (nₗᵢₘ) is also varied as a function of the time derivative of the output electrical power (dP/dt).

7. Method according to one of the preceding claims, **characterized in that** the operating range (34, 34', 34") is determined by the rotational speed (n) of the rotor (12), the blade angle (α) of the rotor blades (14), the corresponding blade angle movement rate (ω) and the output power (P) of the generator (18) and/or the change dP/dt therein.

8. Wind turbine (10) having
- a rotor (12) with rotor blades (14),
- an open-loop and/or closed-loop control device (24),
- a rotational speed-determining device (26) which is connected by signalling technology to the open-loop and/or closed-loop control device (24) and has the purpose of determining the rotational speed (n) of the rotor (12),
- at least one parameter-setting device (28), which is connected by signalling technology to the open-loop and/or closed-loop control device (24) and has the purpose of setting a blade angle (α) and a blade angle movement rate (ω) of the rotor blades (14), and
- a generator (18) which is connected to the rotor (12) and has the purpose of outputting electrical power to a power grid,
**characterized**
**in that** the open-loop and/or closed-loop control device (24) for performing open-loop and/or closed-loop control of the rotational speed (n) of the rotor (12) by means of the parameter-setting device (28) and for carrying out forced braking of the rotor (12) by increasing the blade angles (α) with a predefined positive blade angle movement rate (ωᵣ) is configured in accordance with the method according to one of Claims 1 to 7.

9. Wind turbine according to Claim 8, **characterized in that** the open-loop and/or closed-loop control device (24) has a processor (30) and a memory (32) for estimating the rotational speed of the rotor (12) at least within a time period (Δt) which is predefined by the closed-loop control system.

10. Wind turbine according to Claim 9, **characterized in that** the open-loop and/or closed-loop control device (24) has a mathematical model of the closed-loop control circuit of the closed-loop control system.

11. Wind turbine according to Claim 9 or 10, **characterized by** a braking device (22) for braking the rotor (12) independently of the blade angle (α) of the rotor blades (14), wherein the open-loop and/or closed-loop control device (24) also actuates this brake device (22).

## Revendications

1. Procédé pour faire fonctionner un aérogénérateur (10), comprenant un rotor (12) et un générateur (18) relié au rotor (12), en vue de délivrer de l'énergie électrique à un réseau électrique, le rotor (12) possédant des pales de rotor (14) dont les angles de pale (α) peuvent être déplacés en fonctionnement en vue de réguler la vitesse de rotation (n) du rotor (12) et le rotor (12), en présence d'une vitesse de rotation (n) supérieure à une limite de vitesse de rotation (nₗᵢₘ) qui limite une plage de fonctionnement (34, 34', 34") de l'aérogénérateur (10), subit un freinage forcé par un accroissement des angles de pale (α) avec un taux de déplacement d'angle de pale positif (ωᵣ) prédéfini, notamment avec une valeur du taux de déplacement d'angle de pale positif maximale possible (ω_{r, max}), la limite de vitesse de rotation (nₗᵢₘ) étant modifiée en fonction d'un taux de déplacement d'angle de pale (ω) réglé par la régulation, **caractérisé en ce que** la modification de la limite de vitesse de rotation (nₗᵢₘ) en fonction du taux de déplacement d'angle de pale (ω) réglé par la régulation est une modification temporaire à l'intérieur d'un intervalle de temps (Δt) prédéfini par la régulation.

2. Procédé selon la revendication 1, **caractérisé en ce que** la limite de vitesse de rotation (nₗᵢₘ) est élevée et/ou abaissée par rapport à une valeur limite de vitesse de rotation de base (nₗᵢₘ₀) prédéfinie en fonction d'un taux de déplacement d'angle de pale (ω) réglé par la régulation.

3. Procédé selon la revendication 2, **caractérisé en ce que** la limite de vitesse de rotation (nₗᵢₘ) modifiable par rapport à la valeur limite de vitesse de rotation de base (nₗᵢₘ₀) est augmentée à une valeur limite de vitesse de rotation (nₗᵢₘ₁) plus élevée, différente de celle-ci et pouvant être prédéfinie lorsque le taux de déplacement d'angle de pale (ω) réglé par la régulation a atteint ou dépassé un taux de déplacement d'angle de pale positif (ωᵣ) prédéfini au moment d'atteindre la valeur limite de vitesse de rotation de base (nₗᵢₘ₀).

4. Procédé selon la revendication 2 ou 3, **caractérisé en ce que** la limite de vitesse de rotation (nₗᵢₘ) modifiable par rapport à la valeur limite de vitesse de rotation de base (nₗᵢₘ₀) est réduite à une valeur limite de vitesse de rotation (nₗᵢₘ₂) plus faible, différente de celle-ci et pouvant être prédéfinie lorsque le taux de déplacement d'angle de pale (ω) réglé par la régulation reste inférieur d'une valeur (Δω) pouvant être prédéfinie au taux de déplacement d'angle de pale positif (ωᵣ) prédéfini du freinage forcé au moment d'atteindre ou de dépasser un seuil de vitesse de rotation (n_{trig}) pouvant être prédéfini.

5. Procédé selon l'une des revendications 2 à 4, **caractérisé en ce que** la limite de vitesse de rotation (nₗᵢₘ) modifiable par rapport à la valeur limite de vitesse de rotation de base (nₗᵢₘ₀) est augmentée à une valeur limite de vitesse de rotation (nₗᵢₘ₁) plus élevée, différente de celle-ci et pouvant être prédéfinie lorsque la vitesse de rotation (n), selon une estimation au moyen du taux de déplacement d'angle de pale (ω) réglé par la régulation, au sein de la constante de temps (Δt) prédéfinie, revient dans la plage de vitesses de rotation au-dessous de la valeur limite de vitesse de rotation de base (nₗᵢₘ₀), l'estimation étant effectuée au moyen d'une comparaison des données opérationnelles actuelles de paramètres de fonctionnement (n, α, ω, P) de l'aérogénérateur (10) avec des jeux de données mémorisés de ces paramètres de fonctionnement (n, α, ω, P) ou au moyen d'une comparaison de données opérationnelles actuelles de paramètres de fonctionnement (n, α, ω, P) avec des données de modèle d'un modèle mathématique du circuit de régulation de la régulation.

6. Procédé selon l'une des revendications précédentes, **caractérisé en ce que** la limite de vitesse de rotation (nₗᵢₘ) modifiable est également modifiée en fonction de la dérivée dans le temps de la puissance électrique délivrée (dP/dt).

7. Procédé selon l'une des revendications précédentes, **caractérisé en ce que** la plage de fonctionnement (34, 34', 34") est déterminée par la vitesse de rotation (n) du rotor (12), l'angle de pale (α) des pales de rotor (14), le taux de déplacement d'angle de pale (ω) correspondant et la puissance délivrée (P) du générateur (18) et/ou sa variation dP/dt.

8. Aérogénérateur (10), comprenant
- un rotor (12) possédant des pales de rotor (14),
- un dispositif de commande et/ou de régulation (24),
- un dispositif de détermination de vitesse de rotation (26) destiné à déterminer la vitesse de rotation (n) du rotor (12) et relié par signalétique au dispositif de commande et/ou de régulation (24),
- au moins un dispositif de réglage de paramètres (28) destiné à régler un angle de pale (α) et un taux de déplacement d'angle de pale (ω) des pales de rotor (14) et relié par signalétique au dispositif de commande et/ou de régulation (24), et
- un générateur (18) relié au rotor (12) et destiné à délivrer une puissance électrique à un réseau électrique,
**caractérisé en ce que** le dispositif de commande et/ou de régulation (24) est conçu pour commander et/ou réguler la vitesse de rotation (n) du rotor (12) au moyen du dispositif de réglage de paramètres (28) et pour effectuer un freinage forcé du rotor (12) par une augmentation de l'angle de pale (α) avec un taux de déplacement d'angle de pale (ωᵣ) conformément au procédé selon l'une des revendications 1 à 7.

9. Aérogénérateur selon la revendication 8, **caractérisé en ce que** le dispositif de commande et/ou de régulation (24) possède un processeur (30) et une mémoire (32) pour estimer la vitesse de rotation du rotor (12) au moins à l'intérieur d'un intervalle de temps (Δt) prédéfini par la régulation.

10. Aérogénérateur selon la revendication 9, **caractérisé en ce que** le dispositif de commande et/ou de régulation (24) possède un modèle mathématique du circuit de régulation de la régulation.

11. Aérogénérateur selon la revendication 9 ou 10, **caractérisé par** un dispositif de freinage (22) destiné à freiner le rotor (12) indépendamment de l'angle de pale (α) des pales de rotor (14), le dispositif de commande et/ou de régulation (24) commandant également le dispositif de freinage (22).
